**Europäisches Patentamt**

**European Patent Office**

**Office européen des brevets**

(11) Veröffentlichungsnummer: **0 049 440 B1**

(12) **EUROPÄISCHE PATENTSCHRIFT**

(45) Veröffentlichungstag der Patentschrift:
12.09.84

(51) Int. Cl.³: **G 01 N 31/08**

(21) Anmeldenummer: **81107661.1**

(22) Anmeldetag: **26.09.81**

(54) Verfahren und Probeneinlassventil zum Aufgeben von Proben bei der Flüssigchromatographie.

(30) Priorität: **01.10.80 DE 3037014**

(43) Veröffentlichungstag der Anmeldung:
**14.04.82 Patentblatt 82/15**

(45) Bekanntmachung des Hinweises auf die Patenterteilung:
**12.09.84 Patentblatt 84/37**

(84) Benannte Vertragsstaaten:
**CH DE FR GB LI**

(56) Entgegenhaltungen:
**FR - A - 2 403 823**
**US - A - 3 508 442**
**US - A - 3 668 935**
**US - A - 4 022 065**
**US - A - 4 064 908**
**US - A - 4 068 528**

(73) Patentinhaber: **Bodenseewerk Perkin-Elmer & Co. GmbH, Alte Nussdorfer Strasse 15 Postfach 1120, D-7770 Überlingen/Bodensee (DE)**

(84) Benannte Vertragsstaaten: **CH DE FR GB LI**

(73) Patentinhaber: **THE PERKIN-ELMER CORPORATION, Main Avenue, Norwalk Connecticut 06856 (US)**

(84) Benannte Vertragsstaaten: **CH LI**

(72) Erfinder: **Tamm, Rolf Günther Arnold, Ing. grad., Am Fohrenbühl 8, D-7770 Salem 2 (DE)**
Erfinder: **Tomoff, Toma, Dipl.-Ing., Lavendelweg 9, D-7770 Überlingen (DE)**

(74) Vertreter: **Wolgast, Rudolf, Dipl.-Chem. Dr. et al, Dipl.-Phys. Jürgen Weisse Dipl.Chem. Dr. Rudolf Wolgast Bökenbusch 41 Postfach 11 03 86, D-5620 Velbert 11 Langenberg (DE)**

**Beschreibung**

Die Erfindung betrifft ein Verfahren zum Aufgeben von Proben bei der Flüssigchromatographie, bei welchem

(a) eine Probe mittels einer Injektionsnadel über ein Probeneinlassventil mit einem feststehenden und einem beweglichen Ventilglied in einer ersten Schaltstellung desselben in eine Dosierschleife eingeleitet wird und

(b) das Probeneinlassventil anschliessend in eine zweite Schaltstellung umgeschaltet wird, in welcher es eine Transportflüssigkeitsquelle, die Dosierschleife und eine Trennsäule in Reihe schaltet.

Ein solches Verfahren und ein hierfür geeignetes Probeneinlassventil ist beschrieben in der Firmendruckschrift «Operating Instructions for Model 7125 Syringe Loading Sample Injector» der Rheodyne Incorporated, Berkley, Kalifornien. Bei dem bekannten Probeneinlassventil ist ein feststehender Stator und ein dagegen verdrehbarer Rotor vorgesehen. Die Injektionsnadel wird bis an die Anlagefläche des Stators in den Rotor eingeführt, so dass sie nicht über die Anlagefläche hinaus in den Stator eindringt. Die Dosierbohrung in dem Stator hat einen geringeren Durchmesser als die Injektionsnadel, so dass ein solches Eindringenn sicher verhindert wird. Nach dem Abgeben der Probe in die Dosierscheibe erfolgt eine Verdrehung des Rotors zur Umschaltung des Probeneinlassventils, wobei die Injektionsnadel in ihrer Stellung im Rotor verbleibt. Wollte man die Injektionsnadel vor dem Umschalten des Probeneinlassventils herausziehen, so würde durch die Kolbenwirkung der Injektionsnadel Probe aus dem Stator in den Rotor zurückgesaugt. Diese in den Rotor angesaugte Probenmenge würde zu einer Probenverschleppung Anlass geben. Das Umschalten des Rotors mit der Injektionsnadel führt dazu, dass das Ende der Injektionsnadel während des Umschaltvorganges an der Anlagefläche des Stators entlangkratzt, was zu unerwünschtem Verschleiss führt und die Verwendung besonders gehärteter Anlageflächen erforderlich macht. Auch ist es notwendig, dass die Injektionsnadel ein stumpfes Ende hat, dessen Rand dicht an die Anlagefläche anliegt. Es ist bei dem bekannten Verfahren nicht möglich, spitze Injektionsnadeln zu verwenden. Solche würden einmal die Gefahr eines Verschleisses der Anlagefläche weiter erhöhen. Es würde ausserdem Probenflüssigkeit in der rotorseitigen Bohrung, in welche die Injektionsnadel eingeführt ist, zurückbleiben. Das würde ebenfalls zu einer Probenverschleppung führen.

Der Erfindung liegt die Aufgabe zugrunde, ein Verfahren der eingangs definierten Art zum Aufgeben von Proben bei der Flüssigkeitschromatographie so auszubilden, dass der Verschleiss der Anlagefläche am Stator des Probeneinlassventils vermindert und die Gefahr einer Probenverschleppung vermieden wird.

Erfindungsgemäss wird diese Aufgabe dadurch gelöst, dass

(c) in die Injektionsnadel vor dem Ansaugen der Probenflüssigkeit ein Luftvolumen angesaugt wird,

(d) die Injektionsnadel zum Einleiten der Probe in die Dosierschleife mit ihrem vorderen Ende durch eine Bohrung des beweglichen Ventilglieds hindurch bis in eine Dosierbohrung des feststehenden Ventilglieds eingeführt wird,

(e) die Injektionsnadel nach dem Einleiten der Probe und vor dem Umschalten des Probeneinlassventils zurückgezogen wird.

Bei dem erfindungsgemässen Verfahren wird nach dem Abgeben der Probenflüssigkeit in das feststehende Ventilglied und die Dosierschleife das vor der Probenflüssigkeit angesaugte Luftvolumen in das feststehende Ventilglied und ggf. das anschliessende Ende der Dosierschleife abgegeben. An die Injektionsnadel schliesst sich somit nicht Probenflüssigkeit sondern Luft an. Wenn die Injektionsnadel zurückgezogen wird, dann saugt die Kolbenwirkung der zurückbewegten Injektionsnadel dementsprechend nicht Probenflüssigkeit sondern Luft in das bewegliche Ventilglied zurück. Die Probenflüssigkeit bleibt sicher in dem feststehenden Ventilglied bzw. der Dosierschleife. Das macht es möglich, das Ende der Nadel bis in das feststehende Ventilglied einzuführen, so dass auch keine Probenflüssigkeit etwa zwischen Anlagefläche und Dichtfläche der Ventilglieder gelangen kann. Vor dem Umschalten kann die Injektionsnadel zurückgezogen werden, so dass durch die Injektionsnadel weder die Anlagefläche des feststehenden Ventilglieds beansprucht noch die Umschaltbewegung behindert wird.

Weitere Ausgestaltungen des erfindungsgemässen Verfahrens sind Gegenstand der Unteransprüche 2 und 3. Ein Probeneinlassventil für Flüssigkeitschromatographie zur Durchführung des Verfahrens ist Gegenstand von Patentanspruch 4. Ausgestaltungen des Probeneinlassventils sind Gegenstand der Unteransprüche 5 bis 12.

Ein Ausführungsbeispiel der Erfindung ist nachstehend unter Bezugnahme auf die zugehörigen Zeichnungen näher erläutert:

Fig. 1 zeigt einen Längsschnitt durch ein Probeneinlassventil für Flüssigchromatographie.

Fig. 2 zeigt eine zugehörige Draufsicht.

Fig. 3 zeigt teilweise im Schnitt eine Antriebsvorrichtung für das Probeneinlassventil.

Fig. 4 zeigt das Probeneinlassventil in seiner ersten Schaltstellung.

Fig. 5 zeigt das Probeneinlassventil in seiner zweiten Schaltstellung.

Fig. 6 zeigt die Spitze einer vorzugsweise benutzten Injektionsnadel.

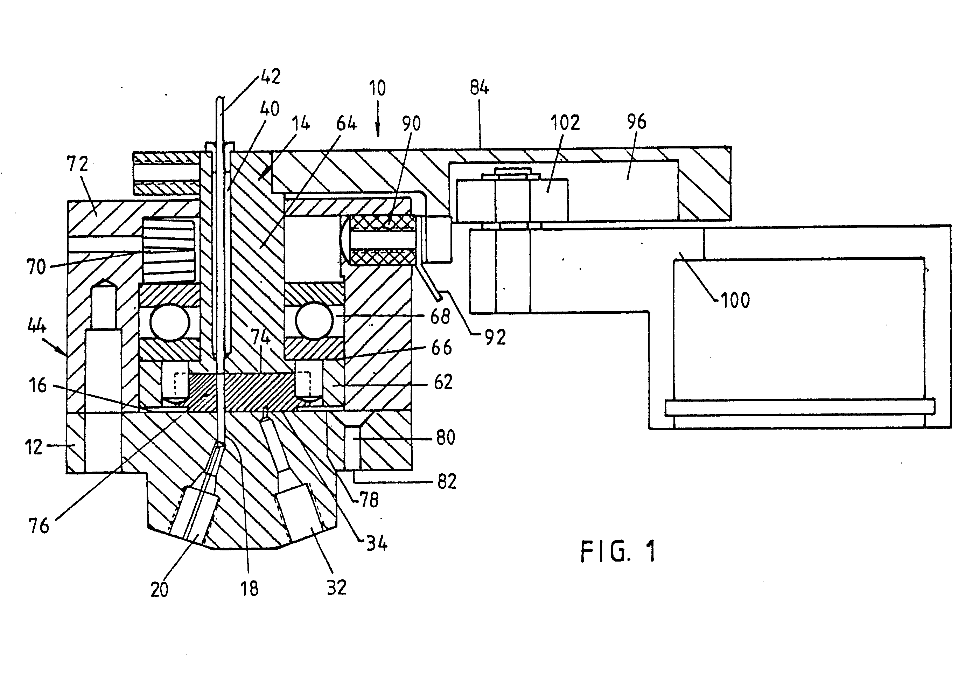

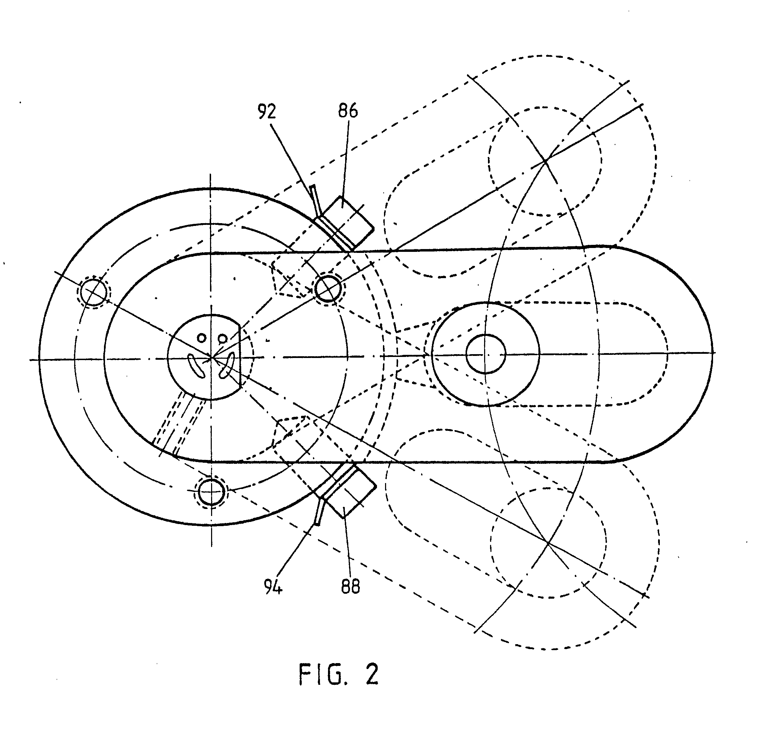

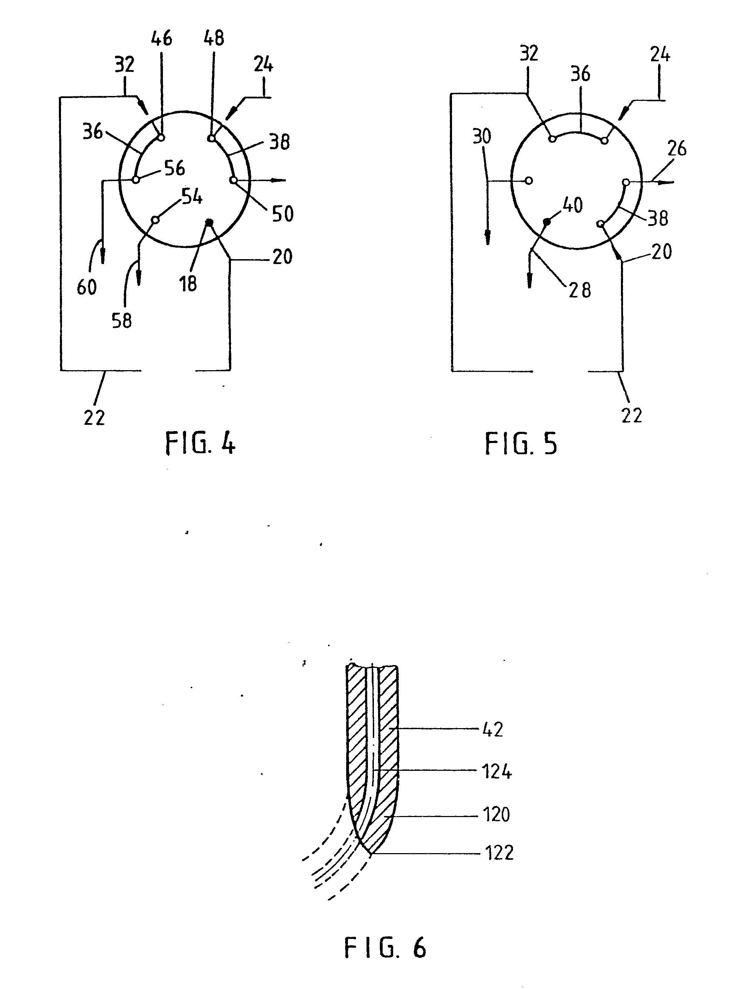

Fig. 1 und 2 zeigen ein Probeneinlassventil 10 mit einem feststehenden Ventilglied 12 und einem gegenüber dem feststehenden Ventilglied 12 beweglichen Ventilglied 14. Das feststehende Ventilglied 12 besitzt eine ebene Anlagefläche 16, in welcher eine Dosierbohrung 18 mündet, die mit einem Anschluss 20 für ein Ende einer Dosierschleife 22 (Fig. 4 und 5) in Verbindung steht, sowie Bohrungen, die mit Anschlüssen 24, 26, 28, 30, 32 für eine Transportflüssigkeitsquelle, üblicherweise eine Transportflüssigkeitspumpe, eine Trennsäule, Auslässen bzw. das andere Ende der Dosierschleife 22 verbunden sind. Das gegenüber dem feststehende Ventilglied 12 bewegliche Ventilglied 14 liegt mit einer Dichtfläche 34 an der Anlagefläche 16 des feststehenden Ventilglieds 12 an. Es enthält Verbindungskanäle 36, 38, durch welche die Bohrungen des feststehenden Ventilglieds 12 so miteinander verbindbar sind, dass in einer ersten Schaltstellung des beweglichen Ventilglieds 14 die mit der Transportflüssigkeitsquelle zu verbindende Bohrung mit der mit der Trennsäule zu verbindenden Bohrung und die mit dem anderen Ende der Dosierschleife 22 zu verbindende Bohrung mit einer Bohrung verbunden ist, die mit einem Auslass in Verbindung steht. In einer zweiten Schaltstellung des beweglichen Ventilglieds 14 ist die mit der Transportflüssigkeitsquelle zu verbindende Bohrung mit der mit dem besagten anderen Ende der Dosierschleife 22 zu verbindenden Bohrung und die mit dem besagten anderen Ende der Dosierschleife 22 zu verbindenden Bohrung und die mit dem besagten einen Ende der Dosierschleife 22 zu verbindende Bohrung mit der Bohrung verbunden, die mit der Trennsäule zu verbinden ist. In dem beweglichen Ventilglied 14 ist eine Axialbohrung 40 zum abdichtenden Einführen einer Injektionsnadel 42 vorgesehen, wobei diese Axialbohrung 40 in der ersten Schaltstellung des beweglichen Ventilglieds 14 mit der Dosierbohrung 18 des feststehenden Ventilglieds 12 fluchtet.

Das feststehende Ventilglied 12 wird von dem Bodenteil eines topfförmigen Ventilgehäuses 44 gebildet. Das bewegliche Ventilglied 14 ist ein Rotor, der mit einer Dichtfläche 34 an dem die Anlagefläche 16 bildenden Boden des Ventilgehäuses 44 anliegt und gegenüber diesem verdrehbar ist. Wie am besten aus Fig. 4 und 5 erkennbar ist, münden in dem Boden des Ventilgehäuses 44 auf einem Kreis um jeweils 60° gegeneinander winkelversetzt die Bohrungen 46, 48, 50, 18, 54 und 56, die mit dem besagten anderen Ende der Dosierschleife 22, der Transportflüssigkeitsquelle, der Trennsäule, dem besagten einen Ende der Dosierschleife 22 sowie einem ersten und einem zweiten Auslass 58, 60 verbindbar sind. In der Dichtfläche 34 des Rotors 14 sind die zwei bogenförmigen Verbindungskanäle 36 und 38 vorgesehen, die sich über je 60° erstrecken und in einem Winkelabstand von 60° voneinander angeordnet sind. Die Axialbohrung 40 zum Einführen der Injektionsspritze ist gegenüber dem einen der Verbindungskanäle 38 um 60° winkelversetzt.

Der Rotor 14 weist einen scheibenförmigen, an dem Boden des Ventilgehäuses 44 anliegenden Kopfteil und einen zentralen Schaft 64 auf, so dass um den Schaft 64 herum auf der der Dichtfläche 34 abgewandten Seite eine Ringschulter 66 gebildet ist. Auf der Ringschulter 60 ist ein Drucklager 68 in Form eines Axial-Kugellagers angeordnet. Vorgespannte, ringförmige Federscheiben 70 sind um den Schaft 64 herum zwischen dem Drucklager 68 und einem den Schaft 64 umgebenden, ringförmigen Gehäusedeckel 72 angeordnet. Der Kopfteil 62 weist in seiner der Anlagefläche 16 zugewandten Stirnseite eine zentrale, flache Ausnehmung 74 auf. In diese Ausnehmung 64 ist ein scheibenförmiger, die Dichtfläche 34 bildender Kunststoffkörper 76 eingesetzt. Der Kunststoffkörper springt um die Dichtfläche 34 herum axial zurück, so dass eine die Dichtfläche 34 umgebende, durch den Kunststoffkörper 76, den Kopfteil 62, die Anlagefläche 16 und die Umfangswandung des Ventilgehäuses 44 begrenzte Ringkammer 78 gebildet wird. Die Ringkammer 78 steht durch eine im Bodenteil des Ventilgehäuses 44 verlaufende Leckbohrung 80 mit einem Auslass 82 in Verbindung.

An dem Schaft 64 des Rotors 14 ist ein Umschalthebel 84 angebracht, welcher zwischen zwei am Ventilgehäuse angebrachten Anschlägen 86 und 88 (Fig. 2) beweglich ist. Bei Anlage des Umschalthebels 84 an dem Anschlag 86 ist der Rotor in der ersten und bei Anlage an dem anderen Anschlag 88 in der zweiten Schaltstellung. Die Anschläge 86 und 88 sind, wie aus Fig. 1 am besten ersichtlich ist, durch Isolierkörper 90 elektrisch isoliert an dem Ventilgehäuse 44 angebracht. Anschläge 86, 88 und Umschalthebel 84 bilden Schaltkontakte in einer die Schaltstellung des Rotors 14 überwachenden Schaltung, durch welche nach Erreichen einer Schaltstellung automatisch die programmgemässen Schritte einleitbar sind. Die Anschläge sind zu diesem Zweck mit Kontaktösen 92 und 94 versehen.

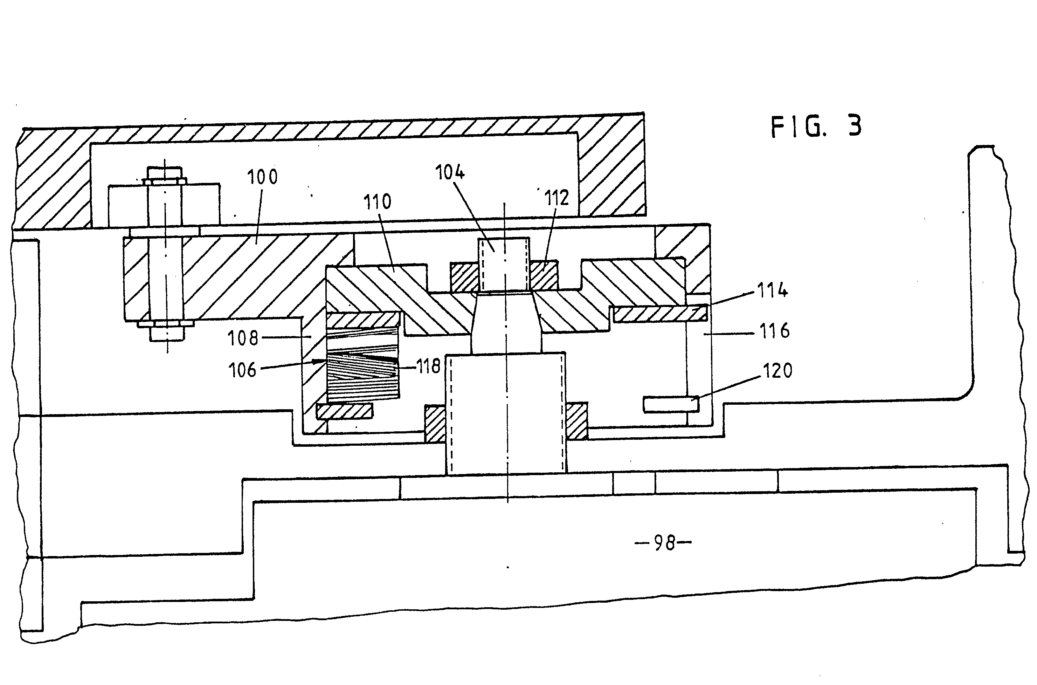

Der Umschalthebel 84 weist eine Längsnut 96 auf. Ein umschaltbarer Stellmotor 98 (Fig. 3), dessen Achse parallel zur Drehachse des Rotors 14 ist, trägt einen Antriebshebel 100, der mit einer Mitnahmerolle 102 in die Längsnut 96 des Umschalthebels 84 eingreift. Wie aus Fig. 3 ersichtlich ist, ist der Antriebshebel 100 mit der Welle 104 des als Stellmotor 98 dienenden Elektromotors über eine Rutschkupplung 106 verbunden. Zu diesem Zweck sitzt an dem Antriebshebel 100 ein zylindrischer Gehäuseteil 108. Auf der Welle 104 des Stellmotors 98 ist ein Teller 110 mittels einer Mutter 112 befestigt. An dem Teller 110 liegt ein Kupplungsring 114 an, der durch eine Führung 116 axialbeweglich aber unverdrehbar in dem zylindrischen Gehäuseteil 108 geführt ist. Der Kupplungsring 114 wird durch Federscheiben 118, die sich an einem Widerlagerring 120 abstützen, in Anlage an dem Teller 110 gehalten. Die Rutschkupplung gibt nach, wenn der Umschalthebel 84 an einem der Anschläge 86 und 88 zur Anlage kommt.

Eine Besonderheit des in Fig. 1 dargestellten Probeneinlassventils 10 besteht darin, dass die Dosierbohrung 18 einen das Einführen der Injektionsnadel 42 in die Dosierbohrung 18 zulassenden Querschnitt besitzt.

Wie aus Fig. 1 und insbesondere aus Fig. 6 ersichtlich ist, ist die Injektionsnadel 40 mit einem angespitzten Ende 120 mit einer Spitze 122 versehen. Bei der verwendeten Injektionsnadel ist das angespitzte Ende 120 dadurch hergestellt, dass das Ende einer Kapillare seitlich abgebogen ist, wie in Fig. 6 gestrichelt dargestellt ist. Dadurch wird auch der Längskanal 124 der Kapillare zur Seite abgelenkt. Das abgebogene Ende wird dann schräg abgeschnitten, so dass die Injektionsnadel 42 eine Spitze 122 im wesentlichen auf ihrer Längsachse und einen am Ende abbiegenden und seitlich mündenden Längskanal 124 aufweist.

Mit dem beschriebenen Probeneinlassventil wird wie folgt gearbeitet:

Die Probe wird mittels der Injektionsnadel 42 über das Probeneinlassventil 10 mit dem feststehenden Ventilglied 12 und dem beweglichen Ventilglied 14 in der ersten Schaltstellung desselben in die Dosierschleife 22 eingeleitet. Das ist die Schaltstellung von Fig. 4. Anschliessend wird das Probeneinlassventil in eine zweite Schaltstellung umgeschaltet, in welcher es eine Transportflüssigkeitsquelle, die Dosierschleife 22 und eine Trennsäule in Reihe schaltet. Dabei wird in die Injektionsnadel 42 vor dem Ansaugen der Probenflüssigkeit ein Luftvolumen angesaugt. Die Injektionsnadel 42 wird zum Einleiten der Probe in die Dosierschleife 22 durch die Bohrung 40 des beweglichen Ventilglieds 14 hindurch bis in die Dosierbohrung 18 des feststehenden Ventilglieds 12 eingeführt. Die Probenflüssigkeit tritt somit aus der Injektionsnadel 42 nur im Bereich des feststehenden Ventilglieds 12 ausgangsseitig von der Dichtfläche 34 und der Anlagefläche 16 aus. Nach dem Einleiten der Probe und vor dem Umschalten des Probeneinlassventils 10 wird die Injektionsnadel 42 zurückgezogen. Durch die Kolbenwirkung der Injektionsnadel beim Zurückziehen wird dabei aber keine Probenflüssigkeit in die Bohrung 40 zurückgesaugt, sondern nur die Luft, die vor dem Ansaugen der Probenflüssigkeit eingesaugt worden und nach dem Abgeben der Probenflüssigkeit ebenfalls in die Dosierbohrung 18 gedrückt worden ist.

Das Einführen der Injektionsnadel in das feststehende Ventilglied 12 und hinter die Dichtfläche 34 gestattet es auch, eine Injektionsnadel 42 mit angespitztem Ende 120 zu verwenden, wie sie beispielsweise in Fig. 6 dargestellt ist. Auch bei Verwendung einer angespitzten Injektionsnadel 42 kann keine Probenflüssigkeit in der Bohrung 40 des beweglichen Ventilglieds verbleiben, wie das der Fall wäre, wenn eine Injektionsnadel mit angespitztem Ende beispielsweise in Verbindung mit einem Probeneinlassventil nach Fig. 2 der oben genannten Rheodyne-Druckschrift benutzt würde.

Vorzugsweise wird eine Injektionsnadel 42 verwendet, wie sie in Fig. 6 dargestellt ist, die durch seitliches Abbiegen des Endes einer Kapillare und schräges Abschneiden dieses abgebogenen Endes hergestellt ist, so dass die Injektionsnadel eine Spitze 122 im wesentlichen auf ihrer Längsachse und einen am Ende abbiegenden und seitlich mündenden Längskanal 124 aufweist. Im einzelnen ist die erste Schaltstellung in Fig. 4 dargestellt. Der Kanal 40 steht mit der Dosierbohrung 18 und über den Auslass 20 mit der Dosierschleife 22 in Verbindung. Das andere Ende der Dosierschleife 22 ist über den Anschluss 32, Bohrung 46, Verbindungskanal 36 und Bohrung 56 mit einem Auslass 60 verbunden. Über Anschluss 24, Bohrung 48, Verbindungskanal 38 und Bohrung 50 sowie Anschluss 26 ist die Transportflüssigkeitsquelle, üblicherweise eine Transportflüssigkeitspumpe mit der Trennsäule verbunden. Es kann jetzt Probenflüssigkeit aus der Injektionsnadel 42 in die Dosierschleife 22 abgegeben werden, wobei hinter der Probenflüssigkeit ein Luftvolumen in die Dosierbohrung 18 abgegeben wird. Die Injektionsnadel 42 wird dann zurückgezogen, wobei Luft durch die Kolbenwirkung der Injektionsnadel 42 in die Bohrung 40 des beweglichen Ventilglieds 14 angesaugt wird, jedoch keine Probenflüssigkeit.

Das Probeneinlassventil 10 wird dann in die zweite Schaltstellung gebracht, die in Fig. 5 dargestellt ist. Es sind jetzt die Transportflüssigkeitsquelle, die Dosierschleife 22 und die Trennsäule in Reihe geschaltet, und zwar fliesst die Transportflüssigkeit von dem Anschluss 24 über Bohrung 48, Verbindungskanal 36, Bohrung 46, Anschluss 32, die Dosierschleife 22, Anschluss 20, Bohrung 18, Verbindungskanal 38, Bohrung 50 und Anschluss 26 durch die Trennsäule.

Das beschriebene Probeneinlassventil kann mittels des Umschalthebels 84 von Hand betätigt werden. Es kann aber auch, wie dargestellt, durch den Stellmotor 98 umgeschaltet werden, so dass die Probenaufgabe automatisiert werden kann.

**Patentansprüche**

1. Verfahren zum Aufgeben von Proben bei der Flüssigchromatographie, bei welchem
(a) eine Probe mittels einer Injektionsnadel (42) über ein Probeneinlassventil (10) mit einem feststehenden und einem beweglichen Ventilglied in einer ersten Schaltstellung desselben in eine Dosierschleife (22) eingeleitet wird und
(b) das Probeneinlassventil anschliessend in eine zweite Schaltstellung umgeschaltet wird, in welcher es eine Transportflüssigkeitsquelle, die Dosierschleife (22) und eine Trennsäule in Reihe schaltet,
dadurch gekennzeichnet, dass
(c) in die Injektionsnadel (42) vor dem Ansaugen der Probenflüssigkeit ein Luftvolumen angesaugt wird,
(d) die Injektionsnadel (42) zum Einleiten der Probe in die Dosierschleife (22) mit ihrem vorderen Ende durch eine Bohrung (40) des beweglichen Ventilglieds (14) hindurch bis in eine Dosierbohrung (18) des feststehenden Ventilglieds (12) eingeführt wird,
(e) die Injektionsnadel (42) nach dem Einleiten der Probe und vor dem Umschalten des Probeneinlassventils (10) zurückgezogen wird.

2. Verfahren nach Anspruch 1, dadurch gekennzeichnet, dass eine Injektionsnadel mit angespitztem Ende verwendet wird.

3. Verfahren nach Anspruch 2, gekennzeichnet durch die Verwendung einer Injektionsnadel (42), die durch seitliches Abbiegen des Endes einer Kapillare und schräges Abschneiden dieses abgebogenen Endes hergestellt ist, so dass die Injektionsnadel (42) eine Spitze (122) im wesentlichen auf ihrer Längsachse und einen am Ende abbiegenden und seitlich mündenden Längskanal (124) aufweist.

4. Probeneinlassventil für Flüssigchromatographen zur Durchführung des Verfahrens nach Anspruch 1, enthaltend:
feststehendes Ventilglied mit einer ebenen Anlagefläche, in welcher eine Dosierbohrung mündet, die mit einem Anschluss für ein Ende einer Dosierschleife in Verbindung steht, sowie Bohrungen, die mit Anschlüssen für eine Transportflüssigkeitsquelle, eine Trennsäule, Auslässe bzw. das andere Ende der Dosierschleife verbunden sind,
ein gegenüber dem feststehenden Ventilglied bewegliches Ventilglied (14) das mit einer Dichtfläche (34) an der Anlagefläche des feststehenden Ventilglieds anliegt und Verbindungskanäle (36, 38) enthält, durch welche die Bohrungen des feststehenden Ventilglieds so miteinander verbindbar sind, dass in einer ersten Schaltstellung des beweglichen Ventilglieds (14) die mit der Transportflüssigkeitsquelle zu verbindende Bohrung mit der mit der Trennsäule zu verbindenden Bohrung und die mit dem anderen Ende der Dosierschleife (22) zu verbindende Bohrung mit einer Bohrung verbunden ist, welche mit einem Auslass in Verbindung steht,

in einer zweiten Schaltstellung des beweglichen Ventilglieds (14) die mit der Transportflüssigkeitsquelle zu verbindende Bohrung mit der mit dem besagten anderen Ende der Dosierschleife (22) zu verbindenden Bohrung und die mit dem besagten einen Ende der Dosierschleife (22) zu verbindende Bohrung mit der Bohrung verbunden ist, die mit der Trennsäule zu verbinden ist, und

eine Axialbohrung (40) in dem beweglichen Ventilglied (14) zum andichtenden Einführen einer Injektionsnadel (42), wobei die Axialbohrung (40) in der ersten Schaltstellung des beweglichen Ventilglieds (14) mit der Dosierbohrung (18) des feststehenden Ventilglieds (12) fluchtet,

dadurch gekennzeichnet,

dass die Dosierbohrung (18) einen das Einführen der Injektionsnadel bis in die Dosierbohrung zulassenden Querschnitt besitzt.

5. Probeneinlassventil nach Anspruch 4, dadurch gekennzeichnet, dass

(a) das feststehende Ventilglied (12) von dem Bodenteil eines topfförmigen Ventilgehäuses (44) gebildet ist,

(b) das bewegliche Ventilglied (14) ein Rotor ist, der mit der Dichtfläche an dem die Anlagefläche bildenden Boden des Ventilgehäuses anliegt und gegenüber diesem verdrehbar ist,

(c) in dem Boden des Ventilgehäuses (44) auf einem Kreis um jeweils 60° gegeneinander winkelversetzt die Bohrungen (46, 48, 50, 18, 54, 56) münden, die mit dem besagten anderen Ende der Dosierschleife (22) der Transportflüssigkeitsquelle, der Trennsäule, dem besagten einen Ende der Dosierschleife (22) sowie einem ersten und einem zweiten Auslass verbindbar sind,

(d) in der Dichtfläche (34) des Rotors (14) zwei bogenförmige Verbindungskanäle vorgesehen sind, die sich über je 60° erstrecken und in einem Winkelabstand von 60° voneinander angeordnet sind, und

(e) die Axialbohrung (40) zum Einführen der Injektionsnadel (42) gegenüber dem einen der Verbindungskanäle um 60° winkelversetzt ist.

6. Probeneinlassventil nach Anspruch 5, dadurch gekennzeichnet, dass

(a) der Rotor (14) einen scheibenförmigen, an dem Boden des Ventilgehäuses (44) anliegenden Kopfteil (62) und einen zentralen Schaft (64) aufweist, so dass um den Schaft (64) herum auf der der Dichtfläche (34) abgewandten Seite eine Ringschulter (66) gebildet ist,

(b) auf der Ringschulter ein Drucklager angeordnet ist und

(c) vorgespannte, ringförmige Federscheiben (70) um den Schaft (64) herum zwischen dem Drucklager (68) und einem den Schaft umgebenden, ringförmigen Gehäusedeckel angeordnet sind.

7. Probeneinlassventil nach Anspruch 6, dadurch gekennzeichnet, dass

(a) der Kopfteil (62) in seiner der Anlagefläche (16) zugewandten Stirnseite eine zentrale, flache Ausnehmung (74) aufweist und

(b) in diese Ausnehmung (74) ein scheibenförmiger, die Dichtfläche bildender Kunststoffkörper (76) eingesetzt ist.

8. Probeneinlassventil nach Anspruch 7, dadurch gekennzeichnet, dass

(a) der Kunststoffkörper (76) um die Dichtfläche (34) herum axial zurückspringt, so dass eine die Dichtfläche (34) umgebende, durch den Kunststoffkörper (76), den Kopfteil (62), die Anlagefläche (34) und die Umfangswandung des Ventilgehäuses (44) begrenzte Ringkammer (78) gebildet wird, ·

(b) die Ringkammer (78) durch eine im Bodenteil des Ventilgehäuses verlaufende Leckbohrung mit einem Auslass in Verbindung steht.

9. Probeneinlassventil nach einem der Ansprüche 6 bis 8, dadurch gekennzeichnet, dass an dem Schaft des Rotors ein Umschalthebel (84) angebracht ist, welcher zwischen zwei am Ventilgehäuse angebrachten Anschlägen (86, 88) beweglich ist, wobei der Rotor (14) bei Anlage des Umschalthebels (84) an dem einen Anschlag (86) in der ersten und bei Anlage an dem anderen Anschlag (88) in der zweiten Schaltstellung ist.

10. Probeneinlassventil nach Anspruch 9, dadurch gekennzeichnet, dass

(a) die Anschläge (86, 88) elektrisch isoliert an dem Ventilgehäuse (44) angebracht sind und

(b) Anschläge (86, 88) und Umschalthebel (84) Schaltkontakte in einer die Schaltstellungen des Rotors (14) überwachenden Schaltung bilden.

11. Probeneinlassventil nach Anspruch 9 oder 10, dadurch gekennzeichnet, dass

(a) der Umschalthebel (84) eine Längsnut (96) aufweist und

(b) ein umsteuerbarer Stellmotor (98), dessen Achse parallel zur Drehachse des Rotors (14) ist, einen Antriebshebel (100) trägt, der mit einer Mitnahmerolle (102) in die Längsnut (96) des Umschalthebels (84) eingreift.

12. Probeneinlassventil nach Anspruch 8, dadurch gekennzeichnet, dass der Antriebshebel (96) mit der Welle des als Stellmotor (98) dienenden Elektromotors über eine Rutschkupplung (106) verbunden ist.

**Claims**

1. Method for feeding samples in the liquid chromatography, in which

(a) a sample, at a first position, is introduced into a dosing loop (22) by means of an injection needle (42) through a sample inlet valve (10) having a fixed and a movable valve member, and

(b) the sample inlet valve subsequently is changed over to a second position, in which it connects in series a carrier liquid source, the dosing loop (22) and a separating column,

characterized in that

(c) an air volume is taken in into the injection needle (42) before the sample liquid,

(d) the injection needle (42) for introducing the sample into the dosing loop (22) is inserted with its front end through a bore (40) of the movable valve member (14) into a dosing bore (18) of the fixed valve member (12), and

(e) the injection needle (42) is retracted after the sample has been introduced and before the sample inlet valve (10) is changed over.

2. Method as set forth in claim 1, characterized in that an injection needle having the end pointed is used.

3. Method as set forth in claim 2, characterized by the use of an injection needle (42) which is produced in that the end of a capillary tube is bent off laterally and cut off obliquely, such that the injection needle (42) has a tip (122) essentially on its longitudinal axis, and a longitudinal passage (124) ending laterally and bent off at the end.

4. Sample inlet valve for liquid chromatographs for executing the method as set forth in claim 1, comprising:

a fixed valve member having a plane contact surface in which a dosing bore ends which communicates with a port for an end of a dosing loop, and bores, which communicate with ports for a carrier liquid source, a separating column, outlets and the other end of the dosing loop, respectively,

a valve member (14) movable relative to the fixed valve member, which valve member (14), with a sealing surface (34), engages the contact surface of the fixed valve member and comprises connecting passages (36, 38) adapted to interconnect the bores of the fixed valve member, such that,

in a first position of the movable valve member (14), the bore to be connected with the carrier liquid source communicates with the bore to be connected with the separating column, and the bore to be connected with the other end of the dosing loop (22) is connected with a bore, which communicates with an outlet,

in a second position of the movable valve member (14), the bore to be connected with the carrier liquid source communicates with the bore to be connected with said other end of the dosing loop (22), and the bore to be connected with said first end of the dosing loop (22) communicates with the bore, which is to be connected with the separating column, and

an axial bore (40) in the movable valve member (14) for sealingly introducing an injection needle (42), this axial bore (40) being aligned with the dosing bore (18) of the fixed valve member (12) in the first position of the movable valve member (14),

characterized in that the dosing bore (18) has a cross section permitting the injection needle to be introduced into the dosing bore.

5. Sample inlet valve as set forth in claim 4, characterized in that

(a) the fixed valve member (12) is formed by the bottom portion of a pot-shaped valve housing (44),

(b) the movable valve member (14) is a rotor, which engages with the sealing surface the bottom of the valve housing, said bottom forming the contact surface, and said rotor being rotatable relative thereto,

(c) the bores (46, 48, 50, 18, 54, 56) end in the bottom of the valve housing (44) on a circle and angularly offset by 60°, and are adapted to be connected with said other end of the dosing loop (22), the carrier liquid source, the separating column, said first end of the dosing loop (22) and with a first and a second outlet,

(d) two curved connecting passages are provided in the sealing surface (34) of the rotor (14), and extend through 60° each and are angularly spaced by 60°, and

(e) the axial bore (40) for introducing the injection needle (42) is angularly offset by 60° with respect to one of the connecting passages.

6. Sample inlet valve as set forth in claim 5, characterized in that

(a) the rotor (14) has a disc-shaped head portion (62) engaging the bottom of the valve housing (44), and a central shaft (64), such that an annular shoulder (66) is formed around the shaft (64) on the side remote from the sealing surface (34),

(b) a thrust bearing is arranged on the annular shoulder,

(c) preloaded annular spring plates (70) are arranged around the shaft (64) between the thrust bearing (68) and an annular housing cover surrounding the shaft.

7. Sample inlet valve as set forth in claim 6, characterized in that

(a) the headpiece (62) has a central flat recess (74) in its front end facing the contact surface (16), and

(b) a disc-shaped plastics body (76) forming the sealing surface is inserted into this recess (74).

8. Sample inlet valve as set forth in claim 7, characterized in that

(a) the plastics body (76) recedes stepwise axially around the sealing surface (34), such that an annular chamber (78) surrounding the sealing surface is formed, said chamber being defined by the plastics body (76), the headpiece (62), the contact surface (34) and the circumferential wall of the valve housing (44), and

(b) the annular chamber (78) communicates with an outlet through a leakage bore extending in the bottom portion of the valve housing.

9. Sample inlet valve as set forth in anyone of the claims 6 to 8, characterized in that a change-over lever (84) is arranged on the shaft of the rotor and is movable between two stops (86, 88) provided on the valve housing, the rotor (14) being in its first position when the change-over lever (84) engages one stop (86), and in its second position, when the lever engages the other stop (88).

10. Sample inlet valve as set forth in claim 9, characterized in that

(a) the stops (86, 88) are attached to the valve housing in a way to be electrically insulated (44), and

(b) the stops (86, 88) and the change-over lever (84) form switch contacts in a circuit controlling the positions of the rotor (14).

11. Sample inlet valve as set forth in claim 9 or 10, characterized in that
(a) the change-over lever (84) has a longitudinal groove (96), and
(b) a reversible servomotor (98) carries a driving lever (100), which engages the longitudinal groove (96) of the change-over lever (84) with a dog roll (102), the axis of the servomotor (98) being parallel to the axis of rotatin of the rotor (14).

12. Sample inlet valve as set forth in claim 8, characterized in that the driving lever (96) is connected through a slipping clutch (106) to the shaft of the electromotor serving as servomotor (98).

## Revendications

1. Méthode pour l'alimentation des échantillons dans la chromatographie liquide, dans laquelle
(a) un échantillon est introduit dans une boucle de dosage (22) au moyen d'une canule (42) par l'intermédiaire d'une soupape d'admission d'échantillon (10) ayant un élément de soupape fixe et un qui est mobile, lors d'une première position de cette soupape, et
(b) la soupape d'admission d'échantillon ensuite est mise dans une deuxième position de soupape, dans laquelle elle met en série une source du liquide de transport, la boucle de dosage (22) et une colonne à fractionner,
caractérisée par le fait que
(c) un volume d'air est aspiré dans la canule (42) avant l'aspiration du liquide d'échantillon,
(d) la canule (42), pour introduire l'échantillon dans la boucle de dosage (22), est introduite avec son extrémité antérieure à travers un alésage (40) de l'élément de soupape mobile (14) jusque dans un alésage de dosage (18) de l'élément de soupape fixe (12), et
(e) la canule (42) est retirée après l'introduction de l'échantillon et avant le changement de position de la soupape d'admission d'échantillon (10).

2. Méthode selon la revendication 1, caractérisée par le fait qu'une canule ayant l'extrémité aiguissée est utilisée.

3. Méthode selon la revendication 2, caractérisée par l'utilisation d'une canule (42), qui est créée en ce que l'extrémité d'un tube capillaire est courbée latéralement et que cette extrémité courbée est coupée obliquement, de sorte que la canule (42) présente une pointe (122) essentiellement sur son axe longitudinal et un canal longitudinal (124) qui est courbé à son extrémité et qui aboutit latéralement.

4. Soupape d'admission d'échantillon pour des chromatographes pour phase liquide, pour réaliser la méthode selon la revendication 1, comportant:
un élément de soupape fixe ayant une surface de contact plate, dans laquelle débouche un alésage de dosage qui communique avec un raccord pour un bout d'une boucle de dosage, et des alésages qui sont liés à des raccords respectivement pour une source de liquide de transport, pour une colonne à fractionner, pour des sorties et pour l'autre bout de la boucle de dosage,
un élément de soupape (14) mobile par rapport à l'élément de soupape fixe et qui se met avec une surface d'étanchéité (34) contre la surface de contact de l'élément de soupape fixe, et comporte des canaux de raccordement (36, 38) par l'intermédiaire desquels les alésages de l'élément de soupape fixe peuvent être liés les uns aux autres de sorte que, lors d'une première position de l'élément de soupape mobile (14), l'alésage qui doit être lié à la source de liquide de transport communique avec l'alésage qui doit être lié à la colonne à fractionner, et l'alésage qui doit être lié à l'autre bout de la boucle de dosage (22) communique avec un alésage qui communique avec une sortie, et que, lors d'une deuxième position de l'élément de soupape mobile (14), l'alésage qui doit être lié à la source du liquide de transport communique avec l'alésage qui doit être lié à l'autre bout de la boucle de dosage (22), et l'alésage qui doit être lié au premier bout de la boucle de dosage (22) communique avec l'alésage qui doit être lié à la colonne à fractionner, et
un alésage axial (40) dans l'élément de soupape mobile (14), pour l'introduction étanche d'une canule (42), cet alésage axial (40) étant aligné sur l'alésage de dosage (18) de l'élément de soupape fixe (12) lors de la première position de l'élément de soupape mobile (14),
caractérisée par le fait que l'alésage de dosage (18) a une section transversale permettant d'introduire la canule (42) jusque dans l'alésage de dosage.

5. Soupape d'admission d'échantillon selon la revendication 4, caractérisée par le fait que
(a) l'élément de soupape fixe (12) est formé de la pièce de fond d'un boîtier de soupape (44) en forme de pot,
(b) l'élément de soupape mobile (14) est un rotor qui se met avec la surface d'étanchéité contre le fond du boîtier de soupape formant la surface de contact, et qui est rotatif par rapport à celui-ci,
(c) les l'alésages (46, 48, 50, 18, 54, 56) qui peuvent être liés à l'autre bout de la boucle de dosage (22), à la source du liquide de transport, à la colonne à fractionner, au premier bout de la boucle de dosage (22) ainsi qu'à une première et une deuxième sortie, débouchèrent de manière décaléé angulairement entre eux de 60° sur un cercle dans le fond du boîtier de soupape (44),
(d) dans la surface d'étanchéité (34) du rotor (14) sont prévus deux canaux de raccordement arqués qui s'étendent chacun sur 60° et qui sont disposés à une distance angulaire de 60° l'un de l'autre, et
(e) l'alésage axial (40), pour introduire la canule (42), est décalé angulairement de 60° par rapport à l'un des canaux de raccordement.

6. Soupape d'admission d'échantillon selon la revendication 5, caractérisée par le fait
(a) que le rotor (14) présente une partie de tête (62) en forme de disque qui se met contre le fond du boîtier de soupape (44), et un manche central (64), de sorte qu'un épaulement annulaire (66) est formé autour du manche (64) sur le côté opposé à la surface d'étanchéité (34),
(b) qu'un palier de butée est disposé sur l'épaulement annulaire, et
(c) que des rondelles élastiques annulaire (70), qui sont mises sous tension préalable, sont disposées autour du manche (64), entre le palier de butée (68) et un couvercle de boîtier annulaire entourant le manche.

7. Soupape d'admission d'échantillon selon la revendication 6, caractérisée par le fait

(a) que la partie de tête (62) présente un creux (74) central et peu profond dans son front tourné vers la surface de contact (16), et

(b) qu'un corps plastique (76) en forme de pot, qui forme la surface d'étanchéité, est placé dans ce creux (74).

8. Soupape d'admission d'échantillon selon la revendication 7, caractérisée par le fait que

(a) le corps plastique (76) se réduit axialement autour de la surface d'étanchéité (34) de sorte qu'une chambre annulaire (78) qui entoure la surface d'étanchéité (34) et qui est limitée par le corps plastique (76), la partie de tête (62), la surface de contact (34) et la paroi circonférentielle du boîtier de soupape (44), est formée, et

(b) la chambre annulaire (78) communique avec une sortie par l'intermédiaire d'un alésage de fuite s'étendant dans la pièce de fond du boîtier de soupape .

9. Soupape d'admission d'échantillon selon l'une quelconque des revendications 6 à 8, caractérisée par le fait que sur le manche du rotor est monté un levier de changement de position (84) qui est déplaçable entre deux butées (86, 88) montées sur le boîtier de soupape, le rotor (14) se trouvant dans une première position lorsque le levier de changement de position (84) se met contre une butée (86) et dans une deuxième position lorsqu'il se met contre l'autre butée (88).

10. Soupape d'admission d'échantillon selon la revendication 9, caractérisée par le fait que

(a) les butées (86, 88) sont montées de manière électriquement isolée sur le boîtier de soupape (44), et

(b) les butées (86, 88) et le levier de changement de position (84) forment des contacts de commutation dans un montage contrôlant la position du rotor (14).

11. Soupape d'admission d'échantillon selon la revendication 9 ou 10, caractérisée par le fait

(a) que le levier de changement de position (84) présente une rainure longitudinale (96), et

(b) un servomotor (98) réversible, dont l'axe est parallèle à l'axe de rotation du rotor (14), porte un levier de commande (100) qui s'engage avec une poulie d'entraînement (102) dans la rainure longitudinale (96) du levier de changement de position (84).

12. Soupape d'admission d'échantillon selon la revendication 8, caractérisée par le fait que le levier de commande (100) est lié à l'arbre du moteur électrique servant de servomotor (98), par l'intermédiaire d'un accouplement à friction (106).

FIG. 1

FIG. 2

FIG. 3

0 049 440

FIG. 4

FIG. 5

FIG. 6